# EUROPEAN PATENT SPECIFICATION

(11) **EP 4 000 173 B1**
(45) Date of publication and mention of the grant of the patent: **04.11.2026**
(21) Application number: 19742737.0
(22) Date of filing: 19.07.2019
(51) Int. Cl.: H02M 5/293, H02M 5/297, H02M 7/483

(54) **AC-TO-AC MMC WITH REDUCED NUMBER OF CONVERTER ARMS**
AC-ZU-AC-MMC MIT REDUZIERTER ANZAHL VON UMMRICHTERARMEN
CONVERTISSEUR MULTI-NIVEAU MODULAIRE (MMC) CA-À-CA AVEC NOMBRE RÉDUIT DE BRAS DE CONVERTISSEUR

(43) Date of publication of application: 25.05.2022
(73) Proprietor: Hitachi Energy Ltd, 8050 Zürich (CH)
(72) Inventor: SCHAAD, Thomas, 4538 Oberbipp (CH); VASILADIOTIS, Michail, 8038 Zurich (CH); SVENSSON, Jan, 723 46 Västerås (SE); STAMATIOU, Georgios, 772 17 Västerås (SE)
(74) Representative: AWA Sweden AB
(86) International application number: PCT/EP2019/069556
(87) International publication number: WO 2021/013319

(56) References cited:
- LEI MING ET AL: "Exploration of a Modular Multilevel Converter for Direct AC-AC Conversion", 2018 IEEE INTERNATIONAL POWER ELECTRONICS AND APPLICATION CONFERENCE AND EXPOSITION (PEAC), IEEE, 4 November 2018 (2018-11-04), pages 1 - 6, XP033476816, DOI: 10.1109/PEAC.2018.8590353
- L BARUSCHKA ET AL: "A new 3-phase direct modular multilevel converter", PROCEEDINGS OF THE 2011-14TH EUROPEAN CONFERENCE ON POWER ELECTRONICS AND APPLICATIONS (EPE 2011), January 2011 (2011-01-01), pages 1 - 10, XP055085054, ISBN: 978-1-61-284167-0
- XU QIANMING ET AL: "Analysis and Comparison of Modular Railway Power Conditioner for High-Speed Railway Traction System", IEEE TRANSACTIONS ON POWER ELECTRONICS, INSTITUTE OF ELECTRICAL AND ELECTRONICS ENGINEERS, USA, vol. 32, no. 8, August 2017 (2017-08-01), pages 6031 - 6048, XP011643909, ISSN: 0885-8993, [retrieved on 20170324], DOI: 10.1109/TPEL.2016.2616721
- LEI MING ET AL: "A sept-branch modular multilevel converter for three-phase to single-phase direct AC/AC equal frequency conversion", IECON 2017 - 43RD ANNUAL CONFERENCE OF THE IEEE INDUSTRIAL ELECTRONICS SOCIETY, IEEE, 29 October 2017 (2017-10-29), pages 2239 - 2244, XP033279885, DOI: 10.1109/IECON.2017.8216377

## Description

### TECHNICAL FIELD

The present disclosure relates to an MMC connected between a three-phase AC system and a single-phase AC system.

### BACKGROUND

Modular Multilevel Converters (MMCs) are used for medium voltage (MV) and high-voltage (HV) converter applications. An MMC comprises converter arms of series-connected (also called cascaded) converter cells, each cell comprising an energy storage (typically capacitor) and a plurality of semiconductor valves forming a full-bridge (also called H-bridge or bi-polar) or half-bridge (also called unipolar) topology of the cell.

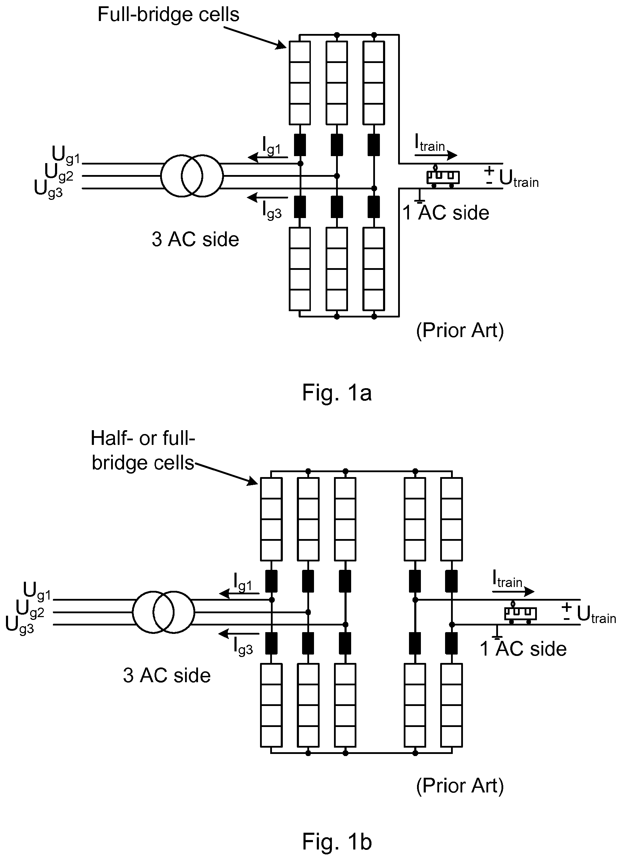

A direct converter in a double-star (also called double-Y or double-wye) topology is illustrated in figure 1a, which is e.g. used in a railway intertie for three-phase alternating current (AC), 3AC, to single-phase AC (1AC) conversion, e.g. 3AC 50 Hz to 1AC 16.7 Hz (or 60 Hz-to-25 Hz) conversion, for low-frequency catenary systems, but is not the most appropriate solution when the input and the output frequencies are equal, e.g. 50 Hz-to-50 Hz. An alternative can be an indirect conversion through a direct current (DC) link in accordance with figure 1b, where an intermediate conversion step decouples the two AC systems and allows trouble-free conversion between any input and output frequency.

A problem with the known MMC topologies of figures 1a and 1b is their cost, primarily allocated on their costly modular arms. The direct converter of figure 1a requires the use of six converter arms that equals three phase-legs (one phase-leg consists of two converter arms: one upper converter arm and one lower converter arm). Furthermore, the indirect converter of figure 1b requires the use of ten converter arms that equals five phase-legs, significantly increasing the overall cost. As a result, the possible reduction in converter arms while maintaining the overall performance, may be important in reducing the overall cost of the converters and present new techno-economically optimal topologies.

For instance, the increased electrification of railway locomotives worldwide has been a driving force for the development and installation of efficient power-electronic converters for handling the railway power supply. In many cases, other than a typical three-phase supply, locomotives require single-phase voltage supply, of the same or different frequency than the main three-phase grid. Specialized power-electronic topologies are thus employed to perform the necessary voltage/power transformation between the main grid and the railway supply system, that are supposed to be decoupled from each other.

Lei Ming et al, "Exploration Of A Modular Multilevel Converter for Direct AC-AC Conversion", IEEE International Power Electronics and Application Conference and Exposition (PEAC), 4 November 2018 discloses a modular multilevel converter (MMC) topology with six branches arranged in a double-Π configuration for direct dc-dc conversion. As a complementary application, the paper explores the same MMC topology for direct ac-ac conversion. By redefining the input and output terminals, a new circuit interface is achieved which enables direct ac-ac conversion from three-phase to single-phase and vice versa.

L. Baruschka et al, "A New 3-Phase Direct Modular Multilevel Converter", Proceedings of the 2011 -14th European Conference on Power Electronics and Applications (EPE 2011), January 2011 discloses a novel 3-phase AC/AC modular multilevel converter needing only half the number of modules of the M2LC in back-to-back configuration.

### SUMMARY

It is an objective of the present invention to provide an AC-to-AC MMC with reduced complexity and cost.

According to an aspect of the present invention, there is provided an AC-to-AC MMC configured to be connected between a three-phase AC system and a single-phase AC system according to claim 1 or 2.

According to another aspect of the present invention, there is provided an MMC arrangement comprising an embodiment of the MMC of the present disclosure, connected between the three-phase and single-phase AC systems, as well as a first power transformer via which the three-phase AC system is connected to the MMC.

By arranging the converter arms in a ring, a direct three-to-single phase converter is obtained, with a reduced number of converter arms to reduce cost and complexity of the MMC topology. In order to balance the DC capacitor voltages of the converter cells in the converter arms, a current Iₒ of specific frequency and phase is circulated in the ring formed by the converter arms, through each arm of series connected converter cells.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Figures 1a and 1b are schematic illustrations of different MMC topologies of the prior art.
Figure 2a is a schematic circuit diagram of an MMC topology for a three-phase to single-phase converter, in accordance with some embodiments of the present invention.
Figure 2b is a schematic circuit diagram of an MMC topology for a three-phase to single-phase converter, with the single-phase system connected via a transformer, in accordance with some embodiments of the present invention.
Figure 2c is a schematic circuit diagram of an MMC topology for a three-phase to single-phase converter, e.g. as in figure 2a or 2b, in which current paths are schematically illustrated, in accordance with some embodiments of the present invention.
Figure 3 is a schematic circuit diagram of another MMC topology for a three-phase to single-phase converter, in accordance with some embodiments of the present invention.
Figure 4 is a schematic circuit diagram of another MMC topology for a three-phase to single-phase converter, in accordance with an example useful for understanding the present invention.
Figure 5 is a schematic circuit diagram of a full-bridge converter cell of an MMC, in accordance with some embodiments of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

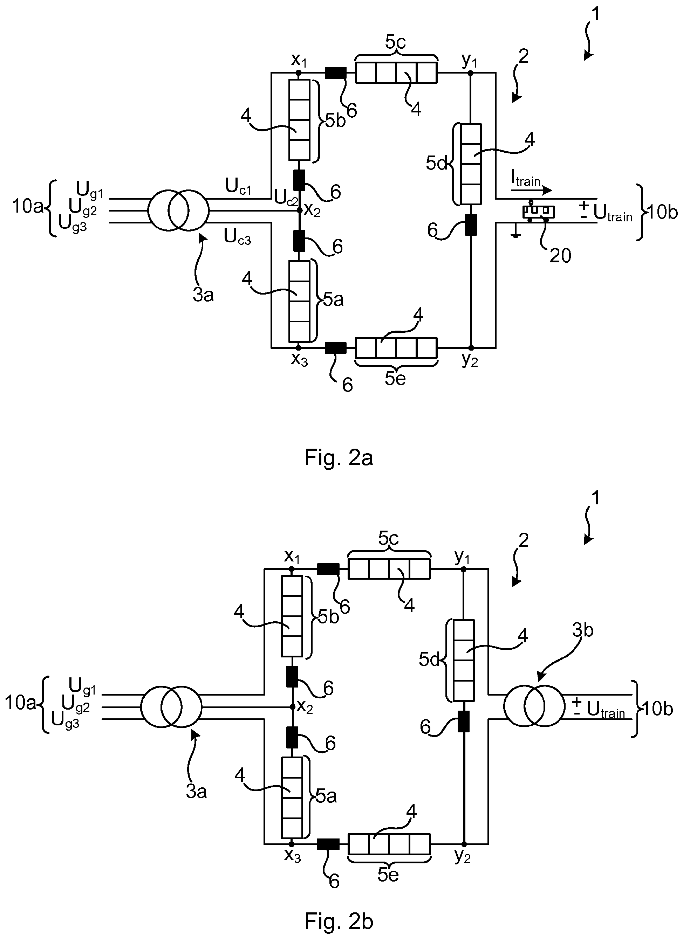

Figure 2a illustrates an MMC arrangement 1 comprising an AC-to-AC MMC 2. The MMC 2 is a three-phase to single-phase converter connected between a three-phase AC system 10a, e.g. a distribution grid, and a single-phase AC system 10b, e.g. a railway grid for powering at least one train 20. In the embodiment illustrated in figure 2a, the single-phase system 10b is grounded and connected directly to the MMC 2, i.e. not via a transformer. On the three-phase side, on the other hand, the MMC 2 is connected to the three-phase system 10a via a first transformer 3a e.g. a standard three-phase type, V-V type or Scott transformer.

Looking at the three-phase side of the MMC 2, the three-phase system 10a comprises a first phase having a grid-side voltage U_{g1}, a second phase having a grid-side voltage U_{g2} and a third phase having a grid-side voltage U_{g3} on the grid-side (primary side) of the first transformer 3a, resulting in converter-side voltages U_{c1}, U_{c2} and U_{c3} on the converter-side (secondary side) of the first transformer 3a. Each of the first, second and third phases of the three-phase system 10a connects, on the converter-side of the first transformer 3a, to respective first, second and third phase terminals x₁, x₂ and x₃ in the MMC 2.

Looking at the single-phase side of the MMC 2, the single phase system 10b has a single-phase voltage Uₜᵣₐᵢₙ and current Iₜᵣₐᵢₙ, e.g. of a railway grid. The single-phase voltage Uₜᵣₐᵢₙ is between a positive conductor and a negative conductor of the single-phase system 10b. The positive conductor is connected to a positive phase terminal y₁ of the MMC 2, and the negative conductor is connected to a negative phase terminal y₂ of the MMC. It should be noted that the polarity of the single-phase system 10b may be reversed to what is shown in figure 2a, resulting in the positive and negative phase terminals y₁ and y₂ changing places with each other. As illustrated in figure 2a, the single-phase system 10b may be grounded, facilitating connecting the single-phase system 10b directly to the MMC 2 without the need for a transformer there between.

The converter 2 has a plurality of converter arms 5 connected in a ring for allowing a current to be circulated through all of the converter arms 5 in said ring. That the converter arms are forming a ring implies that each arm 5 of the arms is connected in the ring with two neighbouring arms of the arms connected to it, one neighbouring arm to either side of the arm. Each converter arm 5 comprises a plurality of series connected (also called cascaded) converter cells 4, preferably full-bridge (also called bi-polar or H-bridge) converter cells but in some embodiments some or all cells 4 of one, some or all arms 5 may be half-bridge (monopolar) cells. For instance, arms 5d, 5e and 5c could comprise or consist of half-bridge cells, while arms 5a and 5b would consist of full-bridge cells. A respective phase reactor 6 may be connected in the ring at and in series with each arm 5. The three-phase phase terminals x₁, x₂ and x₃ and the single-phase phase terminals y₁ and y₂ are also comprised in the ring, connected in the ring such that each of the converter arms 5 is to either side in the ring separated from its neighbouring converter arms by at least one of the phase terminals, i.e. between each two neighbouring arms 5 in the ring there is at least one of the phase terminals arranged.

In the embodiment of figure 2a, the converter arms of the MMC 2 consist of five converter arms 5a, 5b, 5c, 5d and 5e. Below, the sequence in the ring formed by the converter arms and phase terminals of the embodiment of figure 2a is given in a clockwise direction starting from the third phase terminal x₃. However, it should be noted that if the same embodiment is seen from the opposite direction, the same sequence would be in the counter clockwise direction. Thus, the five converter arms and the five phase terminals of the embodiment of figure 2a are in the ring arranged in the (clockwise or counter clockwise) sequence of:
1) the phase terminal x₃ of the third phase of the three-phase AC system 10a,
2) the first converter arm 5a of the five converter arms,
3) the phase terminal x₂ of the second phase of the three-phase AC system 10a,
4) the second converter arm 5b of the five converter arms,
5) the phase terminal x₁ of the first phase of the three-phase AC system 10a,
6) the third converter arm 5c of the five converter arms,
7) the phase terminal y₁ of the positive conductor of the single-phase AC system 10b (or the phase terminal y₂ of the negative conductor if the polarity of the single-phase AC system is reversed),
8) the fourth converter arm 5d of the five converter arms,
9) the phase terminal y₂ of the negative conductor of the single-phase AC system 10b (or the phase terminal y₁ of the positive conductor if the polarity of the single-phase AC system is reversed), and
10) the fifth converter arm (5e) of the five converter arms.

Figure 2b illustrates another embodiment of the MMC arrangement 1. The MMC arrangement 1 is as discussed in relation to figure 2a but here the MMC 2 is connected to the single-phase system 10b via a second (single-phase) transformer 3b. By means of the second transformer 3b, the single-phase system 10b may not need to be grounded.

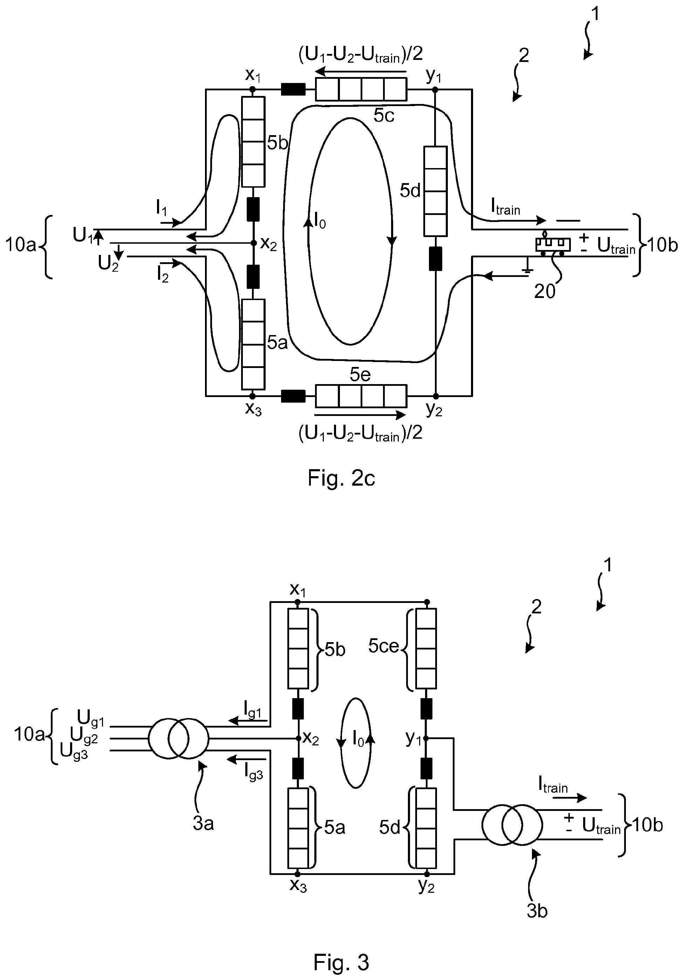

Figure 2c illustrates current paths within some embodiments of the MMC 2, e.g. of the MMC of any of the figures 2a and 2b. The first converter arm 5a is connected between the third phase terminal x₃ and the second phase terminal x₂, resulting in a voltage U₂ across it and a current I₂ through it as indicated by the arrows in a current path from the third phase to the second phase via the first converter arm 5a, where U₂ = U_{c3} - U_{c2}. The second converter arm 5b is connected between the first phase terminal x₁ and the second phase terminal x₂, resulting in a voltage U₁ across it and a current I₁ through it as indicated by the arrows in a current path from the first phase to the second phase via the second converter arm 5b, where U₁ = U_{c1} - U_{c2}.

The fourth converter arm 5d is connected between the positive phase terminal y₁ and the negative phase terminal y₂, resulting in a voltage across the fourth converter arm 5d equal to the difference in potential between the positive and negative phase terminals y₁ and y₂. The current Iₜᵣₐᵢₙ of the single-phase system 10b flows however in a current path as indicated by the arrows through the other four converter arms 5e, 5a, 5b and 5c. This implies that the first and second converter arms 5a and 5b carry currents of both the three-phase system 10a and the single-phase system 10b, typically of different frequencies.

The third converter arm 5c and the fifth converter arm 5e may be regarded as internal arms, which in the embodiment of figure 2c each has a voltage of (U₁-U₂-Uₜᵣₐᵢₙ)/2 across it, but in opposite directions as indicated by the arrows.

The voltages and currents of the three-phase side may be described as: ${U}_{1} \left(t\right) = {U}_{in} ⋅ cos \left({ω}_{in}t\right)$ (1) ${U}_{2} \left(t\right) = {U}_{in} ⋅ cos \left({ω}_{in}t+{θ}_{1}\right)$ (2) ${I}_{1} \left(t\right) = {I}_{in} ⋅ cos \left({ω}_{in}t-{φ}_{1}\right)$ (3) ${I}_{2} \left(t\right) = {I}_{in} ⋅ cos \left({ω}_{in}t+{θ}_{1}-{φ}_{1}\right)$ (4) The voltage and current of the single-phase side may be described as: ${U}_{train} \left(t\right) = {U}_{out} ⋅ cos \left({ω}_{out}t+{θ}_{2}\right)$ (5) ${I}_{train} \left(t\right) = {I}_{out} ⋅ cos \left({ω}_{out}t+{θ}_{2}-{φ}_{2}\right)$ (6) Uᵢₙ is the amplitude of each of U₁ and U₂, Iᵢₙ is the amplitude of each of I₁ and I₂, Uₒᵤₜ is the amplitude of Uₜᵣₐᵢₙ, Iₒᵤₜ is the amplitude of Iₜᵣₐᵢₙ, *ωᵢₙ* is the three-phase frequency and *ωₒᵤₜ* is the frequency of the single-phase system. For given three-phase and single-phase voltages (usually pre-determined), a desired power transfer P and power factors at the three-phase and single-phase sides will determine the magnitudes of the three-phase and single-phase currents. Out of the five arms 5 of the converter 2, the first and second arms 5a and 5b are connected to the fixed three-phase voltages *U*₁(*t*) and *U*₂(*t*), the fourth arm 5d is connected to the fixed single-phase voltage *Uₜᵣₐᵢₙ*(*t*), leaving the two internal arms 5c and 5e that create the voltage [*U₁*(*t*) *- U*₂(*t*) *- Uₜᵣₐᵢₙ*(*t*)]/2, with the polarity shown in figure 2c. For all the converter arms to be balanced, the three-phase and single-phase currents flow in the way depicted in figure 2c, and a circulating current *I*₀ must flow through all the arms 5 of the converter 2. This circulating current Iₒ has the form of: ${I}_{0} \left(t\right) = {I}_{circ} ⋅ cos \left({ω}_{in}t+{θ}_{circ}\right)$ (7) where *I_{circ}* and *θ_{circ}* are functions of *Uᵢₙ, Uₒᵤₜ, P, θ*₁, *φ*₁, *and φ*₂.

Figure 3 illustrates a further embodiment of the suggested reduced direct MMC topology with an even further reduced number of converter arms 5, to four converter arms. In this embodiments, the two internal arms 5c and 5e of figures 2, each of which bearing a voltage of [*U₁*(*t*) *- U₂*(*t*) *- Uₜᵣₐᵢₙ*(*t*)]/2, have been merged into a single internal arm 5ce that bears a voltage of *U₁*(*t*) *- U₂*(*t*) *- Uₜᵣₐᵢₙ*(*t*) located between the second and fourth arms 5b and 5d in the ring. This results in both the third phase terminal x₃ and the negative phase terminal y₂ (or positive phase terminal y₁ if the polarity of the single-phase system 10b is reversed) being located in the ring between the two neighbouring first and fourth arms 5a and 5d. Alternatively, the merged internal arm 5ce could be located between the first and fourth arms 5a and 5d, which would result in both the first phase terminal x₁ and the positive phase terminal y₁ (or negative phase terminal y₂ if the polarity of the single-phase system 10b is reversed) being located in the ring between the two neighbouring second and fourth arms 5b and 5d. It is noted that the circulating current Iₒ is also in this embodiment circulated in the ring through all of the converter arms 5a, 5b, 5ce and 5d.

Below, the sequence in the ring formed by the converter arms and phase terminals of the embodiment of figure 3 is given in a clockwise direction starting from the third phase terminal x₃. However, it should be noted that if the same embodiment is seen from the opposite direction, the same sequence would be in the counter clockwise direction. Thus, the four converter arms and the five phase terminals of the embodiment of figure 2a are in the ring arranged in the (clockwise or counter clockwise) sequence of:
1) the phase terminal x₃ of the third phase of the three-phase AC system 10a,
2) the first converter arm 5a of the four converter arms,
3) the phase terminal x₂ of the second phase of the three-phase AC system 10a,
4) the second converter arm 5b of the four converter arms,
5) the phase terminal x₁ of the first phase of the three-phase AC system 10a,
6) the third (merged internal) converter arm 5ce of the four converter arms,
7) the phase terminal y₁ of the positive conductor of the single-phase AC system 10b (or the phase terminal y₂ of the negative conductor if the polarity of the single-phase AC system is reversed),
8) the fourth converter arm 5d of the four converter arms, and
9) the phase terminal y₂ of the negative conductor of the single-phase AC system 10b (or the phase terminal y₁ of the positive conductor if the polarity of the single-phase AC system is reversed).

It is noted that the embodiments of figures 2 and 3, having four or five converter arms, all have the following sequence in common:
1) the phase terminal x₃ of the third phase of the three-phase AC system 10a,
2) the first converter arm 5a,
3) the phase terminal x₂ of the second phase of the three-phase AC system 10a,
4) the second converter arm 5b,
5) the phase terminal x₁ of the first phase of the three-phase AC system 10a,
6) the third converter arm 5c or 5ce,
7) the phase terminal y₁ of the positive conductor of the single-phase AC system 10b (or the phase terminal y₂ of the negative conductor if the polarity of the single-phase AC system is reversed),
8) the fourth converter arm 5d, and
9) the phase terminal y₂ of the negative conductor of the single-phase AC system 10b (or the phase terminal y₁ of the positive conductor if the polarity of the single-phase AC system is reversed).

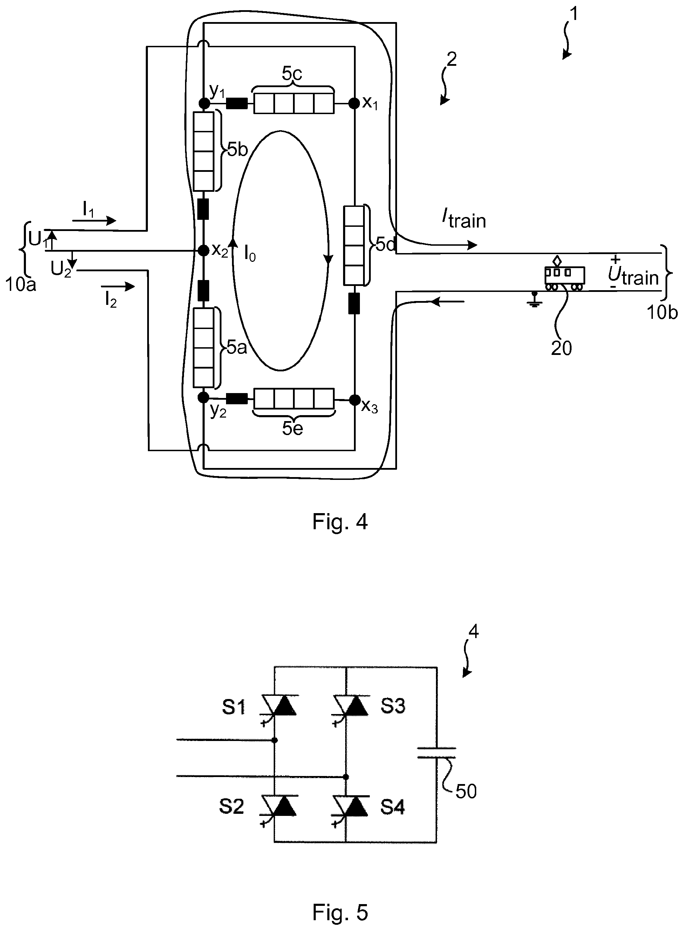

Figure 4 illustrates an unclaimed example of the MMC 2 having five converter arms 5a, 5b, 5c, 5d and 5e, in which the converter arms are arranged in the ring as in the embodiments of figures 2a, 2b and 2c, but where some of the phase terminals x₁, x₂, x₃, y₁ and y₂ are positioned differently in the ring.

Below, the sequence in the ring formed by the converter arms and phase terminals of the example of figure 4 is given in a clockwise direction starting from the phase terminal before the first converter arm 5a. However, it should be noted that if the same example is seen from the opposite direction, the same sequence would be in the counter clockwise direction. Thus, the five converter arms and the five phase terminals of the example of figure 4 are in the ring arranged in the (clockwise or counter clockwise) sequence of:
1) the phase terminal y₁ or y₂ of one of the positive or negative conductors of the single-phase AC system 10b,
2) the first converter arm 5a of the converter arms,
3) the phase terminal x₂ of the second phase of the three-phase AC system 10a,
4) the second converter arm 5b of the converter arms,
5) the phase terminal y₂ or y₁ of the other of the positive or negative conductors of the single-phase AC system 10b,
6) the third converter arm 5c of the converter arms,
7) the phase terminal x₁ of the first phase of the three-phase AC system 10a,
8) the fourth converter arm 5d of the converter arms,
9) the phase terminal x₃ of the third phase of the three-phase AC system 10a, and
10) the fifth converter arm 5e of the converter arms.

Again, it is noted that a circulating current Io is circulated in the ring through all of the converter arms also in the example of figure 4.

Figure 5 illustrates a converter cell 4, here a full-bridge converter cell comprising a full-bridge topology of four semiconductor switches S1, S2, S3 and S4 connected across an energy storage 50 and allowing the cell to be bi-polar. The energy storage may typically comprise at least one capacitor.

Embodiments of the converter 2 may be used with any nominal voltages of the three-phase and/or single-phase AC systems 10a and 10b, e.g. high-voltage of at least 80 kV, but some embodiments may be especially useful with medium voltage AC systems 10a and/or 10b having a nominal voltage within the range of 1-80 kV, e.g. within the range of 15-30 kV.

The three-phase and single-phase AC systems 10a and 10b may have any, same or different (but preferably different), nominal fundamental frequency. In case e.g. of a three-phase national distribution grid 10a, the nominal frequency may be 50 or 60 Hz. In case e.g. of a single-phase railway system 10b, the nominal frequency may be 25 Hz (which is standard in North America), or 16.7 or 50/3 Hz (which is standard in some European countries). The circulating current I₀ typically has the same nominal fundamental frequency as the three-phase system 10a, e.g. 50 or 60 Hz, to efficiently balance the arms 5.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. An AC-to-AC MMC (2) configured to be connected between a three-phase AC system (10a) and a single-phase AC system (10b), the MMC comprising:
only four converter arms (5a, 5b, 5ce, 5d) connected in a ring to allow a circulating current (I₀) to be circulated in said ring through each of the converter arms, each arm (5) comprising a plurality of series-connected converter cells (4); wherein the MMC further comprises:
phase terminals (x, y) arranged in the ring, between the converter arms (5) such that each of the converter arms is to either side in the ring separated from neighbouring converter arms by at least one of said phase terminals, the phase terminals comprising respective terminals (x₁, x₂, x₃) for each of the three phases of the three-phase AC system (10a) and respective terminals (y₁, y₂) for each of the positive and negative conductors of the single-phase AC system (10b), wherein the converter arms (5a, 5b, 5ce, 5d) and phase terminals (x₁, x₂, x₃, y₁, y₂) are in the ring arranged in the sequence of:
- the phase terminal (x₃) of the third phase of the three-phase AC system (10a),
- a first converter arm (5a) of the converter arms,
- the phase terminal (x₂) of the second phase of the three-phase AC system (10a),
- a second converter arm (5b) of the converter arms,
- the phase terminal (x₁) of the first phase of the three-phase AC system (10a),
- a third converter arm (5c/5ce) of the converter arms,
- the phase terminal (y₁/y₂) of one of the positive or negative conductors of the single-phase AC system (10b),
- a fourth converter arm (5d) of the converter arms, and
- the phase terminal (y₂/y₁) of the other of the positive or negative conductors of the single-phase AC system (10b).

2. An AC-to-AC MMC (2) configured to be connected between a three-phase AC system (10a) and a single-phase AC system (10b), the MMC comprising:
only five converter arms (5a, 5b, 5c, 5d, 5e) connected in a ring to allow a circulating current (I₀) to be circulated in said ring through each of the converter arms, each arm (5) comprising a plurality of series-connected converter cells (4); wherein the MMC further comprises:
phase terminals (x, y) arranged in the ring, between the converter arms (5) such that each of the converter arms is to either side in the ring separated from neighbouring converter arms by at least one of said phase terminals, the phase terminals comprising respective terminals (x₁, x₂, x₃) for each of the three phases of the three-phase AC system (10a) and respective terminals (y₁, y₂) for each of the positive and negative conductors of the single-phase AC system (10b), wherein the converter arms (5a, 5b, 5c, 5d, 5e) and phase terminals (x₁, x₂, x₃, y₁, y₂) are in the ring arranged in the sequence of:
- the phase terminal (x₃) of the third phase of the three-phase AC system (10a),
- a first converter arm (5a) of the converter arms,
- the phase terminal (x₂) of the second phase of the three-phase AC system (10a),
- a second converter arm (5b) of the converter arms,
- the phase terminal (x₁) of the first phase of the three-phase AC system (10a),
- a third converter arm (5c) of the converter arms,
- the phase terminal (y₁/y₂) of one of the positive or negative conductors of the single-phase AC system (10b),
- a fourth converter arm (5d) of the converter arms,
- the phase terminal (y₂/y₁) of the other of the positive or negative conductors of the single-phase AC system (10b), and
- a fifth converter arm (5e) of the converter arms.

3. The MMC of any preceding claim, wherein the three-phase AC system (10a) has a nominal frequency of 50 or 60 Hz.

4. The MMC of any preceding claim, wherein the single-phase AC system (10b) has a nominal frequency of 50, 60, 25, 16.7 or 50/3 Hz.

5. An MMC arrangement (1) comprising:
a first power transformer (3a) and the MMC (2) of any preceding claim, wherein the MMC (2) is arranged to be connected to the three-phase AC system (10a) via the first power transformer (3a).

6. The MMC arrangement of claim 5, wherein the single-phase AC system (10b) is configured to be grounded and the MMC (2) is configured to be connected directly to the single-phase AC system, without a second power transformer (3b) therebetween.

7. The MMC arrangement of claim 5 comprising a second power transformer (3b), wherein,
the MMC (2) is arranged to be connected to the single-phase AC system (10b) via the second power transformer (3b).

## Patentansprüche

1. AC-zu-AC-MMC (2), der konfiguriert ist, um zwischen ein dreiphasiges AC-System (10a) und ein einphasiges AC-System (10b) geschaltet zu werden, wobei der MMC umfasst: nur vier Umrichterarme (5a, 5b, 5ce, 5d), die in einem Ring verbunden sind, um zu erlauben, dass ein zirkulierender Strom (Iₒ) in dem Ring durch jeden der Umrichterarme zirkuliert wird, wobei jeder Arm (5) eine Vielzahl von in Reihe geschalteten Umrichterzellen (4) umfasst; wobei der MMC ferner umfasst:
Phasenanschlüsse (x, y), die in dem Ring zwischen den Umrichterarmen (5) angeordnet sind, sodass jeder der Umrichterarme auf beiden Seiten in dem Ring durch mindestens einen der Phasenanschlüsse von benachbarten Umrichterarmen getrennt ist, wobei die Phasenanschlüsse entsprechende Anschlüsse (x₁, x₂, x₃) für jede der drei Phasen des dreiphasigen AC-Systems (10a) und entsprechende Anschlüsse (y₁, y₂) für jeden von dem positiven und dem negativen Leiter des einphasigen AC-Systems (10b) umfassen, wobei sich die Umrichterarme (5a, 5b, 5ce, 5d) und die Phasenanschlüsse (x₁, x₂, x₃, y₁, y₂) in dem Ring befinden und der folgenden Reihe nach angeordnet sind:
- der Phasenanschluss (x₃) der dritten Phase des dreiphasigen AC-Systems (10a),
- ein erster Umrichterarm (5a) der Umrichterarme,
- der Phasenanschluss (x₂) der zweiten Phase des dreiphasigen AC-Systems (10a),
- ein zweiter Umrichterarm (5b) der Umrichterarme,
- der Phasenanschluss (x₁) der ersten Phase des dreiphasigen AC-Systems (10a),
- ein dritter Umrichterarm (5c/5ce) der Umrichterarme,
- der Phasenanschluss (y₁/y₂) von einem des positiven oder des negativen Leiters des einphasigen AC-Systems (10b),
- ein vierter Umrichterarm (5d) der Umrichterarme, und
- der Phasenanschluss (y₂/y₁) des anderen des positiven oder des negativen Leiters des einphasigen AC-Systems (10b).

2. AC-zu-AC-MMC (2), der konfiguriert ist, um zwischen ein dreiphasiges AC-System (10a) und ein einphasiges AC-System (10b) geschaltet zu werden, wobei der MMC umfasst: nur fünf Umrichterarme (5a, 5b, 5c, 5d, 5e), die in einem Ring verbunden sind, um zu erlauben, dass ein zirkulierender Strom (Iₒ) in dem Ring durch jeden der Umrichterarme zirkuliert wird, wobei jeder Arm (5) eine Vielzahl von in Reihe geschalteten Umrichterzellen (4) umfasst; wobei der MMC ferner umfasst:
Phasenanschlüsse (x, y), die in dem Ring zwischen den Umrichterarmen (5) angeordnet sind, sodass jeder der Umrichterarme auf beiden Seiten in dem Ring durch mindestens einen der Phasenanschlüsse von benachbarten Umrichterarmen getrennt ist, wobei die Phasenanschlüsse entsprechende Anschlüsse (x₁, x₂, x₃) für jede der drei Phasen des dreiphasigen AC-Systems (10a) und entsprechende Anschlüsse (y₁, y₂) für jeden von dem positiven und dem negativen Leiter des einphasigen AC-Systems (10b) umfassen, wobei sich die Umrichterarme (5a, 5b, 5c, 5d, 5e) und die Phasenanschlüsse (x₁, x₂, x₃, y₁, y₂) in dem Ring befinden und der folgenden Reihe nach angeordnet sind:
- der Phasenanschluss (x₃) der dritten Phase des dreiphasigen AC-Systems (10a),
- ein erster Umrichterarm (5a) der Umrichterarme,
- der Phasenanschluss (x₂) der zweiten Phase des dreiphasigen AC-Systems (10a),
- ein zweiter Umrichterarm (5b) der Umrichterarme,
- der Phasenanschluss (x₁) der ersten Phase des dreiphasigen AC-Systems (10a),
- ein dritter Umrichterarm (5c) der Umrichterarme,
- der Phasenanschluss (y₁/y₂) von einem des positiven oder des negativen Leiters des einphasigen AC-Systems (10b),
- ein vierter Umrichterarm (5d) der Umrichterarme,
- der Phasenanschluss (y₂/y₁) des anderen des positiven oder des negativen Leiters des einphasigen AC-Systems (10b) und
- ein fünfter Umrichterarm (5e) der Umrichterarme.

3. MMC nach einem der vorhergehenden Ansprüche, wobei das dreiphasige AC-System (10a) eine Nennfrequenz von 50 oder 60 Hz aufweist.

4. MMC nach einem der vorhergehenden Ansprüche, wobei das einphasige AC-System (10b) eine Nennfrequenz von 50, 60, 25, 16,7 oder 50/3 Hz aufweist.

5. MMC-Anordnung (1), umfassend:
einen erste Leistungstransformator (3a) und den MMC (2) nach einem der vorhergehenden Ansprüche, wobei der MMC (2) geeignet ist, um über den ersten Leistungstransformator (3a) mit dem dreiphasigen AC-System (10a) verbunden zu werden.

6. MMC-Anordnung nach Anspruch 5, wobei das einphasige AC-System (10b) konfiguriert ist, um geerdet zu werden, und wobei der MMC (2) konfiguriert ist, um direkt, ohne einen zwischengeschalteten zweiten Leistungstransformator (3b), mit dem einphasigen AC-System verbunden zu werden.

7. MMC-Anordnung nach Anspruch 5, die einen zweiten Leistungstransformator (3b) umfasst, wobei der MMC (2) geeignet ist, um über den zweiten Leistungstransformator (3b) mit dem einphasigen Wechselstromsystem (10b) verbunden zu werden.

## Revendications

1. MMC AC-AC (2) configuré pour être connecté entre un système à courant alternatif triphasé (10a) et un système à courant alternatif monophasé (10b), le MMC comprenant : uniquement quatre branches de convertisseur (5a, 5b, 5ce, 5d) raccordées en anneau pour permettre de faire circuler un courant de circulation (Iₒ) dans ledit anneau à travers chacune des branches de convertisseur, chaque branche (5) comprenant une pluralité de cellules de convertisseur (4) connectées en série ; où le MMC comprend en outre :
des bornes de phase (x, y) disposées dans l'anneau, entre les branches de convertisseur (5) de sorte que chacune des branches de convertisseur soit de part et d'autre dans l'anneau séparée des branches de convertisseur voisines par au moins l'une desdites bornes de phase, les bornes de phase comprenant des bornes respectives (x₁, x₂, x₃) pour chacune des trois phases du système à courant alternatif triphasé (10a) et des bornes respectives (y₁, y₂) pour chacun des conducteurs positif et négatif du système à courant alternatif monophasé (10b), où les branches de convertisseur (5a, 5b, 5ce, 5d) et les bornes de phase (x₁, x₂, x₃, y₁, y₂) se trouvent dans l'anneau agencé suivant la séquence suivante :
- la borne de phase (x₃) de la troisième phase du système à courant alternatif triphasé (10a),
- une première branche de convertisseur (5a) des branches de convertisseur,
- la borne de phase (x₂) de la deuxième phase du système à courant alternatif triphasé (10a),
- une deuxième branche de convertisseur (5b) des branches de convertisseur,
- la borne de phase (x₁) de la première phase du système à courant alternatif triphasé (10a),
- une troisième branche de convertisseur (5c/5ce) des branches de convertisseur,
- la borne de phase (y₁/y₂) d'un des conducteurs positif ou négatif du système à courant alternatif monophasé (10b),
- une quatrième branche de convertisseur (5d) des branches de convertisseur, et
- la borne de phase (y₂/y₁) de l'autre des conducteurs positif ou négatif du système à courant alternatif monophasé (10b).

2. MMC AC-AC (2) configuré pour être connecté entre un système à courant alternatif triphasé (10a) et un système à courant alternatif monophasé (10b), le MMC comprenant : uniquement cinq branches de convertisseur (5a, 5b, 5c, 5d, 5e) raccordées en anneau pour permettre de faire circuler un courant de circulation (Iₒ) dans ledit anneau à travers chacune des branches de convertisseur, chaque branche (5) comprenant une pluralité de cellules de convertisseur (4) connectées en série ; où le MMC comprend en outre :
des bornes de phase (x, y) disposées dans l'anneau, entre les branches de convertisseur (5) de sorte que chacune des branches de convertisseur soit de part et d'autre dans l'anneau séparée des branches de convertisseur voisines par au moins l'une desdites bornes de phase, les bornes de phase comprenant des bornes respectives (x₁, x₂, x₃) pour chacune des trois phases du système à courant alternatif triphasé (10a) et des bornes respectives (y₁, y₂) pour chacun des conducteurs positif et négatif du système à courant alternatif monophasé (10b), où les branches de convertisseur (5a, 5b, 5c, 5d, 5e) et les bornes de phase (x₁, x₂, x₃, y₁, y₂) se trouvent dans l'anneau agencé suivant la séquence suivante :
- la borne de phase (x₃) de la troisième phase du système à courant alternatif triphasé (10a),
- une première branche de convertisseur (5a) des branches de convertisseur,
- la borne de phase (x₂) de la deuxième phase du système à courant alternatif triphasé (10a),
- une deuxième branche de convertisseur (5b) des branches de convertisseur,
- la borne de phase (x₁) de la première phase du système à courant alternatif triphasé (10a),
- une troisième branche de convertisseur (5c) des branches de convertisseur,
- la borne de phase (y₁/y₂) d'un des conducteurs positif ou négatif du système à courant alternatif monophasé (10b),
- une quatrième branche de convertisseur (5d) des branches de convertisseur,
- la borne de phase (y₂/y₁) de l'autre des conducteurs positif ou négatif du système à courant alternatif monophasé (10b), et
- une cinquième branche de convertisseur (5e) des branches de convertisseur.

3. MMC selon l'une quelconque des revendications précédentes, dans lequel le système à courant alternatif triphasé (10a) a une fréquence nominale de 50 ou 60 Hz.

4. MMC selon l'une quelconque des revendications précédentes, dans lequel le système à courant alternatif monophasé (10b) a une fréquence nominale de 50, 60, 25, 16,7 ou 50/3 Hz.

5. Agencement de MMC (1) comprenant :
un premier transformateur de puissance (3a) et le MMC (2) selon l'une quelconque des revendications précédentes, où le MMC (2) est agencé pour être connecté au système à courant alternatif triphasé (10a) par l'intermédiaire du premier transformateur de puissance (3a).

6. Agencement de MMC selon la revendication 5, dans lequel le système à courant alternatif monophasé (10b) est configuré pour être mis à la terre, et le MMC (2) est configuré pour être connecté directement au système à courant alternatif monophasé, sans qu'un deuxième transformateur de puissance (3b) soit placé entre eux.

7. Agencement de MMC selon la revendication 5, comprenant un deuxième transformateur de puissance (3b), où le MMC (2) est agencé pour être connecté au système à courant alternatif monophasé (10b) par l'intermédiaire du deuxième transformateur de puissance (3b).
